# EUROPÄISCHE PATENTANMELDUNG

(11) **EP 2 977 090 A1**
(43) Veröffentlichungstag der Anmeldung: **27.01.2016**
(21) Anmeldenummer: 15002372.9
(22) Anmeldetag: 18.12.2008
(51) Int. Cl.: B01D 39/20

(54) **FILTER MIT EINEM FILTERMEDIUM DAS GEGEN AUFTRETENDE ELEKTRISCHE AUFLADUNGEN AUSGELEGT IST**

(30) Priorität: 15.01.2008 DE 102008004344
(62) Teilanmeldung aus: 08870973.8
(71) Anmelder: HYDAC FILTERTECHNIK GMBH, 66280 Sulzbach/Saar (DE)
(72) Erfinder: Schwender, Matthias, 66459 Kirkel (DE); Schmitz, Andreas, 66459 Kirkel (DE); Koch, Edwin, 66636 Tholey (DE); Brocker, Claudia, 66121 Saarbrücken (DE)
(74) Vertreter: Bartels & Partner

(57) **Zusammenfassung**

Die Erfindung betrifft einen Filter mit einem Filtermedium (10), das im Betrieb zum Abreinigen von Fluid dient, insbesondere in Form von Hydraulikflüssigkeit, wie Öl, wobei Teile des Filtermediums (10) zueinander und/oder zu dem zu reinigenden Fluid derart unterschiedliche Potentiale aufweisen, dass diese sich gegenseitig zumindest teilweise aufheben, wobei das Filterelement mehrlagig aufgebaut ist, wobei die einzusetzenden Filtermaterialien für die einzelnen Filterlagen derart aus einer triboelektrischen Spannungsreihe zu wählen sind, dass die Potentialdifferenz zwischen ihnen und dem die Filterlagen durchströmenden Fluid so gering wie möglich ausfällt, und wobei mindestens ein Teil des Filters ableitfähig ausgestaltet ist in Form einer mit einem O-Ring versehenen Endkappe (14, 16), in Form eines sonstig ableitenden Dichtringes, in Form eines Stützrohres (20) oder in Form eines Teils dieses Stützrohres (20).

## Beschreibung

Die Erfindung betrifft ein Filter mit einem Filtermedium, das im Betrieb zum Abreinigen von Fluid dient, insbesondere in Form von Hydraulikflüssigkeit, wie Öl.

Filter der vorstehend genannten Art sind handelsüblich und finden beispielsweise bei Hydraulikanlagen in von Hydraulikölen als Fluid durchströmten Systemzweigen verbreitete Anwendung. Zur druckstabilen Ausbildung des Filters ist regelmäßig vorgesehen, dass im Inneren desselben ein Stützrohr, vorzugsweise aus Kunststoffmaterial, angeordnet ist, das mit Perforationen versehen die Abstützung des eingesetzten Filtermediums entgegen der vorgesehenen Durchströmungsrichtung des Fluids vornimmt. Ferner sind regelmäßig zwei Endkappen vorgesehen, zwischen denen sich das Filtermedium sowie bei Bedarf das Kunststoffstützrohr erstreckt. Die Endkappen sind ebenfalls vorzugsweise aus Kunststoffmaterialien gebildet, insbesondere ist das Kunststoffstützrohr in der Art eines Spritzgussteils ausgebildet. Daneben gibt es auch Filterlösungen, bei denen das Stützrohr aus einem perforierten Metallmantel gebildet ist oder das Stützrohr kann auch vollständig als Stützelement für das Filtermedium entfallen.

Da das Filtermedium zur Fixierung mit den Endkappen regelmäßig mit diesen im Bereich seiner freien Enden verklebt wird, stellt der eingesetzte Klebstoff, häufig in Form eines Epoxydharz- oder PU-Klebstoffes, eine Art Isolationsschicht zwischen eingesetztem Filtermedium, den beiden Endkappen und/oder dem Stützrohr her, wobei der Isolationseffekt noch dadurch weiter verstärkt ist, dass das Stützrohr vorzugsweise immer länger ausgeführt ist als das eigentliche Filtermedium (Meshpack), damit auf dieses keine Kräfte in Längsrichtung einwirken können. Wird eine dahingehende Krafteinleitung nicht vermieden, ist nicht auszuschließen, dass aufgrund der auftretenden Druckbeanspruchungen beim Durchströmen des Filtermediums mit dem Fluid dieses geschädigt wird und dergestalt ist dann eine ausreichende Filtrationsleistung nicht mehr gewährleistet.

Durch den angesprochenen Isolationsaufbau, bedingt durch Isolationsschichten zwischen Filtermedium, Endkappen sowie dem Stützrohr, kommt es beim Fluiddurchtritt mit eventuell vorliegender partikulärer Verschmutzung am Filtermedium zu elektrostatischen Aufladungen, insbesondere des Filtermediums. Aufgrund der derart erzeugten Potentialunterschiede innerhalb des Filterelementes kann es dann plötzlich zu Entladungen kommen zwischen statisch aufgeladenen Filterelementteilen, insbesondere in Form des Filtermediums, und elektrisch leitenden Komponenten, insbesondere in Form des regelmäßig metallischen Filtergehäuses, in dem das Filterelement aufgenommen ist mit der Folge, dass es zu Funkenentladungen kommt, was im Hinblick auf die Brennbarkeit der zu filtrierenden Fluidmedien, wie Hydrauliköl, Schwerölkraftstoffe, wie Dieselkraftstoffe, od. dgl., nicht gerade als unkritisch zu bewerten ist und die angesprochenen Funkenentladungen können auch zu einer Schädigung des Öls sowie des empfindlichen Filtermediummaterials führen. Ferner hat es sich gezeigt, dass durch elektrostatische Aufladungen von Ölmedien diese schneller altern und insoweit früher im Rahmen der Wartung zu tauschen sind.

Um diesen Nachteilen zu begegnen, ist bei einem gattungsgemäßen Filter nach der DE 10 2004 005 202 A1 vorgeschlagen worden, dass mindestens eine der Endkappen des Filters und/oder zumindest ein Endbereich des Filtermediums eine Kontaktierungseinrichtung aufweist und/oder die jeweilige Endkappe selbst oder Teile von ihr elektrisch leitend ausgebildet sind zwecks Abtransport der insbesondere im Betrieb des Filters auftretenden elektrostatischen Aufladungen; allein hat es sich in der Praxis gezeigt, dass die bekannte Lösung, bei der die auftretenden Potentialunterschiede und Ladungen ausschließlich über die Endkappen, insbesondere die untere Endkappe, in den durch das Gehäuse bildenden Massepunkt ableitbar sind, noch verbessert werden sollte.

Ausgehend von diesem Stand der Technik liegt der Erfindung die Aufgabe zugrunde, die bekannten Filterelemente unter Beibehalten ihrer Vorteile, nämlich eine hohe Betriebssicherheit und hohe Druckwertstabilität, selbst bei hohen Durchflussleistungen an abzureinigendem Fluid, zu gewährleisten, dahingehend weiter zu verbessern, dass es insbesondere im Betrieb des Filterelementes nicht zu schädigenden Potentialunterschieden kommen kann. Eine dahingehende Aufgabe löst ein Filter mit den Merkmalen des Patentanspruches 1 in seiner Gesamtheit.

Erfindungsgemäß ist diese Aufgabe durch den Patentanspruch 1 dadurch gelöst, dass Teile des Filtermediums des Filters zueinander und/oder zu dem zu reinigenden Fluid derart unterschiedliche Potentiale aufweisen, dass diese sich gegenseitig zumindest teilweise aufheben, wobei das Filterelement mehrlagig aufgebaut ist, wobei die einzusetzenden Filtermaterialien für die einzelnen Filterlagen derart aus einer triboelektrischen Spannungsreihe zu wählen sind, dass die Potentialdifferenz zwischen ihnen und dem die Filterlagen durchströmenden Fluid so gering wie möglich ausfällt, und wobei mindestens ein Teil des Filters ableitfähig ausgestaltet ist in Form einer mit einem O-Ring versehenen Endkappe, in Form eines sonstig ableitenden Dichtringes, in Form eines Stützrohres oder in Form eines Teils dieses Stützrohres.

Teile des Filtermediums weisen zueinander und/oder zu dem zu reinigenden Fluid derart unterschiedliche Potentiale auf, dass diese sich gegenseitig zumindest teilweise aufheben. Hierbei geht man von der grundsätzlichen Überlegung aus, dass, je größer die Potentialdifferenz zwischen zwei Wirkmedien ist, hier in Form von Einzellagen, aus denen das Filtermedium aufgebaut ist, es zu einer größeren Ladungsgenerierung zwischen ihnen kommt. Besonders vorteilhaft ist es, also nicht nur wie bei der ersten Variante, Filterlagen für das Filtermedium einzusetzen, die ohnehin ein geringeres Potential zum abzureinigenden Fluid haben, sondern vorzusehen, dass eine erste Lage des Filtermediums ein gegenüber dem zu filtrierenden Fluid (Öl) positives Potential hat und eine zweite nachfolgende Einzellage des Filtermediums, die anschließend von dem Fluid durchströmt wird, aus der Reihe der Materialien mit negativem Potential ausgewählt ist, mit der Folge, dass die erste Lage zunächst das Fluid positiv auflädt, die zweite Lage aber wieder negativ, und die hierdurch entstehenden Ladungen werden auf diese Weise teilweise oder komplett neutralisiert. Der dahingehende Kompensationseffekt tritt auch auf, wenn in umgekehrter Abfolge das abzureinigende Fluid zunächst die zweite Lage mit dem negativen Potential und dann die erste Lage mit dem positiven Potential durchströmen sollte.

Das Filtermedium besteht derart aus einem Material, dass dessen Potentialunterschied zu dem zu reinigenden Fluid, insbesondere in Form von Hydrauliköl, gering ist. Durch den Einsatz eines Filtermediums, das ein geringes Potential zum Öl hat, ist sichergestellt, dass keine große Ladung generiert werden kann. Die Größe der entstehenden Ladungsmenge und dem zugeordneten Potentialaufbau zwischen dem Hydrauliköl durchströmten Filtermedium und dem Öl selbst kann man durch geeignete Materialwahl gezielt beeinflussen. Gemäß der bekannten elektrischen Spannungsreihe für verschiedene für das Filtermedium vorgesehene Filtermaterialien kann man das Potential, das sich zwischen zwei wechselwirkenden Komponenten, in unserem Fall zwischen Öl und Filtermedium, ausbildet, abschätzen. Bei der dahingehenden Vorgehensweise wird grundsätzlich sehr wenig Ladung generiert, so dass erst gar nicht das Problem auftritt, diese an einen Massepunkt, wie im Stand der Technik aufgezeigt, ableiten zu müssen.

Das Filter mit seinen jeweiligen Komponenten setzt vorzugsweise für die gezielte Ableitung elektrischer Ladung entlang eines vorgebbaren Weges zumindest teilweise ableitfähige Materialien ein, wobei die ableitfähigen Materialien einen elektrischen Widerstand zwischen 10³ bis 10⁹ Ωm besitzen. Hierdurch wird eine Art Kompromiss zwischen leitfähigen und nicht leitfähigen Filtern hergestellt, wie sie jeweils im Stand der Technik aufgezeigt sind. Die erfindungsgemäße Filterlösung führt demgemäß die Ladung zeitlich langsamer weg als ein leitfähiges Filter und würde insoweit im Betrieb das Fluid (Öl) nicht zu hoch aufladen. Gleichzeitig ist die Gefahr einer Entladung wie im nicht leitfähigen Filterelement minimiert, da sich durch die gezielt herbeigeführte langsame Ableitung keine hohe Feldstärke im Filterelement aufbauen kann.

In Durchströmungsrichtung des Fluids durch das Filtermedium ist diesem nachgeschaltet eine Ladungsausgleichslage vorhanden, die die entstehende elektrische Ladung des Fluids zumindest teilweise an das zugeordnete Filtermedium zurückgibt. Diese Ladungsausgleichslage, die auch durch eine Beschichtung auf dem Filtermedium gebildet sein kann, reduziert so die Aufladung des Fluids und des Filtermediums und verhindert so Entladungen im Filter.

Bei einer bevorzugten Ausführungsform der genannten erfinderischen Lösung ist vorgesehen, das Filtermedium mit leitfähigen Fasern oder anders gearteten leitfähigen Bestandteilen zu versetzen, so dass das Filtermedium leitfähig ist und die Ladung schnell an das Filtergehäuse und somit gegen "Masse" abgegeben werden kann. Um das Filtermedium zu stabilisieren, sind vorzugsweise die genannten Bestandteile oder Fasern in Form einer Matrixstruktur ausgebildet.

Um eine hohe wirksame Filterfläche zu erreichen, ist das Filtermedium vorzugsweise plissiert ausgebildet und stützt sich zwischen zwei Endkappen des Filters zumindest im Innenbereich an einem fluiddurchlässigen Stützrohr ab.

Im Folgenden werden die erfindungsgemäßen Lösungsvarianten anhand von Ausführungsbeispielen nach der Zeichnung näher erläutert. Dabei zeigen in prinzipieller und nicht maßstäblicher Darstellung die
- Fig. 1: in teilweise aufgeschnittenem Zustand eine Längsansicht auf ein Filter;
- Fig.2: in perspektivischer Draufsicht und teilweise in aufgeschnittener Form den oberen Teil des Filters nach der Fig. 1 mit der besseren Darstellung wegen aufgefalteter Einzellagen des eingesetzten Filtermediums;
- Fig.3 bis 5: verschiedene Graphiken zur Verdeutlichung der Fluidauf- und -entladungseffekte.

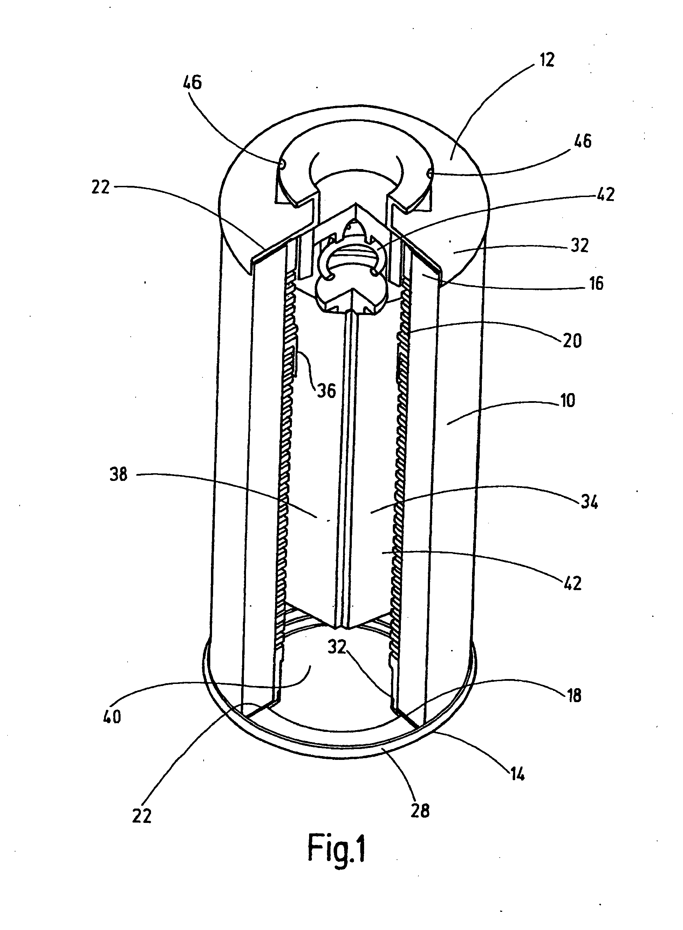

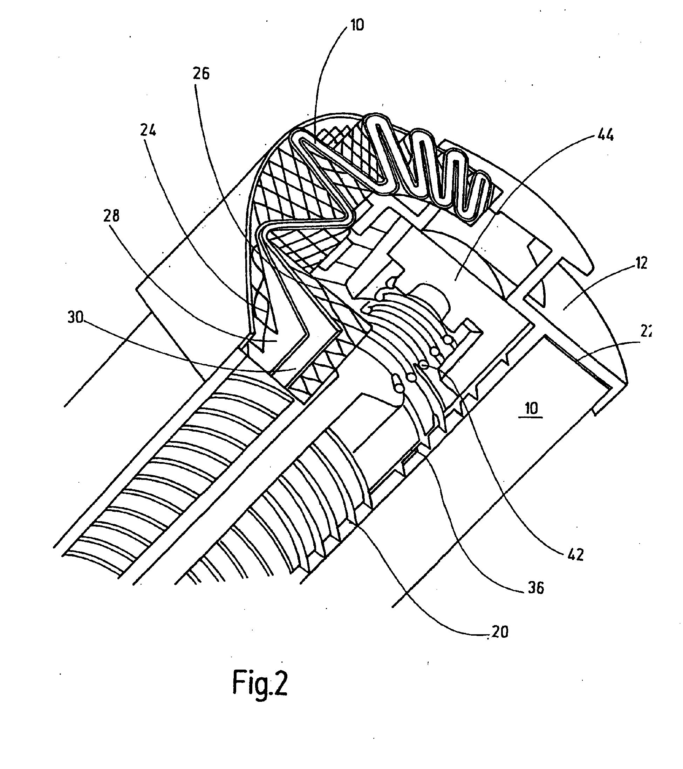

Zunächst wird anhand der Fig.1 und 2 der grundsätzliche Aufbau eines Filters näher beschrieben, wie er für die vorliegenden erfindungsgemäßen Lösungsvarianten einsetzbar ist. Unabhängig hiervon kann das Filter auch einen anderen Aufbau haben, insbesondere in der Art einer ebenen Filtermatte oder Filterplatte ausgebildet sein, wie sie beispielhaft für sog. Stapelfilter zum Einsatz kommen. Das hier vorgestellte Filter ist in der Art eines sog. Filterelementes aufgebaut und weist ein Filtermedium 10 auf, das sich zwischen zwei Endkappen 12,14 erstreckt, die jeweils mit einem zuordenbaren Endbereich 16,18 des Filtermediums 10 verbunden sind, das sich im übrigen innenumfangsseitig an einem fluiddurchlässigen Stützrohr 20 abstützt. Insbesondere kann das Filtermedium 10 an den genannten Endbereichen 16,18 über eine Klebstoffschicht mit den Endkappen 12,14 verbunden werden. Das jeweilige Klebstoffbett ist mit dem Bezugszeichen 22 gekennzeichnet.

Zum Abreinigen durchtritt das Fluid von außen nach innen das Filter und mithin das Filtermedium 10. Der einfacheren Darstellung wegen ist das Filtermedium 10 in der Fig.1 als zylindrisches Filtermattenteil dargestellt; eine Ausführung, die so durchaus realisierbar ist. Bevorzugt ist jedoch das Filtermedium 10 plissiert ausgebildet gemäß der Teildarstellung nach der Fig.2; erstreckt sich also in Form von Filterfalten um das Stützrohr 20 herum. Wie sich weiter aus der Fig.2 ergibt, ist das Filtermedium 10 mehrlagig aufgebaut. Insbesondere weist der Mehrlagenaufbau eine äußere Abstützlage 24 auf, die insbesondere in Form eines Netzes oder eines Gewebes zur Stabilisierung des sonstigen Lagenaufbaues dient. Vergleichbar hierzu kann eine innere Abstützlage 26 vorhanden sein. Des Weiteren ist eine Vorfilterlage 28 und eine Hauptfilterlage 30 vorhanden. Zwischen äußerer Abstützlage 24 und Vorfilterlage 28 sowie zwischen Hauptfilterlage 30 und innerer Abstützlage 26 kann noch ein nicht näher dargestelltes anstromseitiges Vlies zum mechanischen Schutz der Filterlagen eingesetzt sein bzw. ein entsprechend ausgebildetes abstromseitiges Vlies (gleichfalls nicht dargestellt). Ein dahingehend sechslagiger oder sonstiger mehrlagiger Aufbau des Filtermediums ist im Stand der Technik üblich, so dass an dieser Stelle hierauf nicht mehr näher eingegangen wird. Da aus Gewichtsgründen heraus sowie aus Gründen des Recyclings moderne Filter zusehends aus Kunststoffmaterialien aufgebaut sind, geht dies grundsätzlich mit dem Problem der verstärkt statischen Aufladung einher und die bereits beschriebenen nachteiligen, sogenannten triboelektrischen Effekte können sich einstellen. In weiterer Erläuterung des Filters nach der Fig.1 ist die jeweilige Endkappe 12,14 nach innen und außen hin jeweils mit einer vorstehenden Ringfläche 32 versehen, die zwischen sich das zuordenbare Klebstoffbett 22 integriert. Sowohl die Endkappen 14,16 als auch das Stützrohr 20 sind vorzugsweise in der Art von Kunststoffspritzgießteilen ausgebildet.

Innerhalb des Stützrohres 20 ist längs dessen Kreissegmenten, die die Fluid-Durchtrittsstellen begrenzen, ein Trennsegment 34 eingehängt oder an einer Verbindungsstelle 36 entsprechend eingeklippt, wobei die einzelnen Trennwände 38 des dahingehenden Segmentes 34 von oben her gesehen in der Art eines dreizackigen Sternes ausgebildet sind und im Übrigen die Strömungsführung im Inneren des Filters optimieren, und zwar in Richtung einer Durchtrittsstelle 40 im Bereich der unteren Endkappe 14, über die das abgereinigte Fluid das Filter verlässt. In Blickrichtung auf die Fig.1 gesehen und in Verlängerung nach oben hin weist das Trennsegment 34 einen mittels einer Druckfeder 42 beaufschlagten, plattenartigen Schließkörper 44 (Fig.2) auf, der dergestalt eine Bypassfunktion wahrnimmt, dass bei zugesetztem Filtermedium 10 das nicht abgereinigte Fluid über die diametral einander gegenüberliegenden Eintrittsstellen 46 im oberen Endkappenbereich 12 in das Innere des Filters eintreten kann zur Durchströmung desselben und Austritt in Richtung der unteren Durchtrittsstelle 40, wobei die Bypassfunktion sich von ihrem Auslöseverhalten her über die vorgebbare Federkraft der Druckfeder 42 einstellen lässt.

Mit den erfindungsgemäßen Lösungen ist es jedenfalls möglich, auch bei reinen Kunststoffelementen oder bei solchen Filtern, die überwiegend aus Kunststoffmaterialien aufgebaut sind, das Problem der statischen Aufladung sicher in den Griff zu bekommen, wobei die Abänderung nicht dergestalt ist, als dass Druckstabilitätswerte, BETA-Werte, Filtrationsleistungen etc. eine Einschränkung erfahren würden, was die nachfolgenden Ausführungen noch entsprechend verdeutlichen werden.

Im Folgenden werden die verschiedenen Lösungsvarianten anhand eines Fluids in Form von Hydrauliköl näher erläutert. Insofern stellt das vorgestellte Filter nach den Fig. 1 und 2 ein Hydraulikfilter dar, wobei solche Filter selbstredend auch andere Fluide einschließlich Gase von Partikelverschmutzungen abreinigen können. Grundvoraussetzung für die beschriebenen Funktionen ist, dass das Fluid an sich nicht leitfähig ist, das aber beim Durchtritt durch das Filter elektrostatische Aufladungen erfahren kann, die zu den bereits beschriebenen nachteiligen Effekten im anschließenden Fluidkreis führen können, beispielsweise Entladungen mit sich bringen, die das Öl schneller altern lassen oder das Filter gar zerstören können. Die zu erläuternden Lösungsvarianten führen entweder, jede für sich gesehen, zu einer elektrostatischen Verbesserung oder in Kombination mit einer oder mehreren anderen Varianten wird zusammen das elektrostatische Verhalten des Fluidsystems verbessert.

Bei den ersten beiden Lösungsvarianten kommen Materialkombinationen mit unterschiedlichem Potential zum Öl zum Einsatz. So können zum einen Filtermaterialien zum Einsatz kommen, die ein geringes Potential zum Öl haben, so dass keine große Ladung generiert werden kann, und zum anderen ist der Einsatz von mehreren Filtermaterialien möglich, die unterschiedliche Potentiale zum Öl haben und so die elektrische Ladung des Öls zum Teil oder komplett neutralisieren können. Sofern von Filtermaterialien die Rede ist, können diese das gesamte Filtermedium 10 bilden; es ist aber auch möglich, dass nur einzelne Lagen, wie die Vorfilterlage 28 oder die Hauptfilterlage 30, mit dahingehenden Filtermaterialien ausgestattet oder aus diesen vollständig aufgebaut sind.

Die Größe der entstehenden Ladungsmenge und den Potentialaufbau zwischen dem öldurchströmten Filtermedium 10 und dem Öl kann man durch geeignete Materialwahl gezielt beeinflussen. Gemäß der elektrischen Spannungsreihe gemäß der nachfolgenden Tabelle kann man das Potential, das sich zwischen zwei Materialien ausbildet, in diesem Fall zwischen Öl und Filtermedium, abschätzen. Bringt man zwei unterschiedliche Materialien in Kontakt, bildet sich zwischen den beiden ein Potential aus. Bringt man beispielsweise ein elastomeres Silikonmaterial, das in der triboelektrischen Spannungsreihe in der positiven Polarität ganz oben steht, in Kontakt mit Polytetrafluorethylen, das in der dahingehenden Spannungsreihe als am negativsten beschrieben ist, ist das Potential zwischen diesen beiden maximal und es beginnen Elektronen vom negativen Polytetrafluorethylen zum positiven Elastomersilikonmaterial zu fließen, um den gewünschten Ladungsausgleich vorzunehmen.

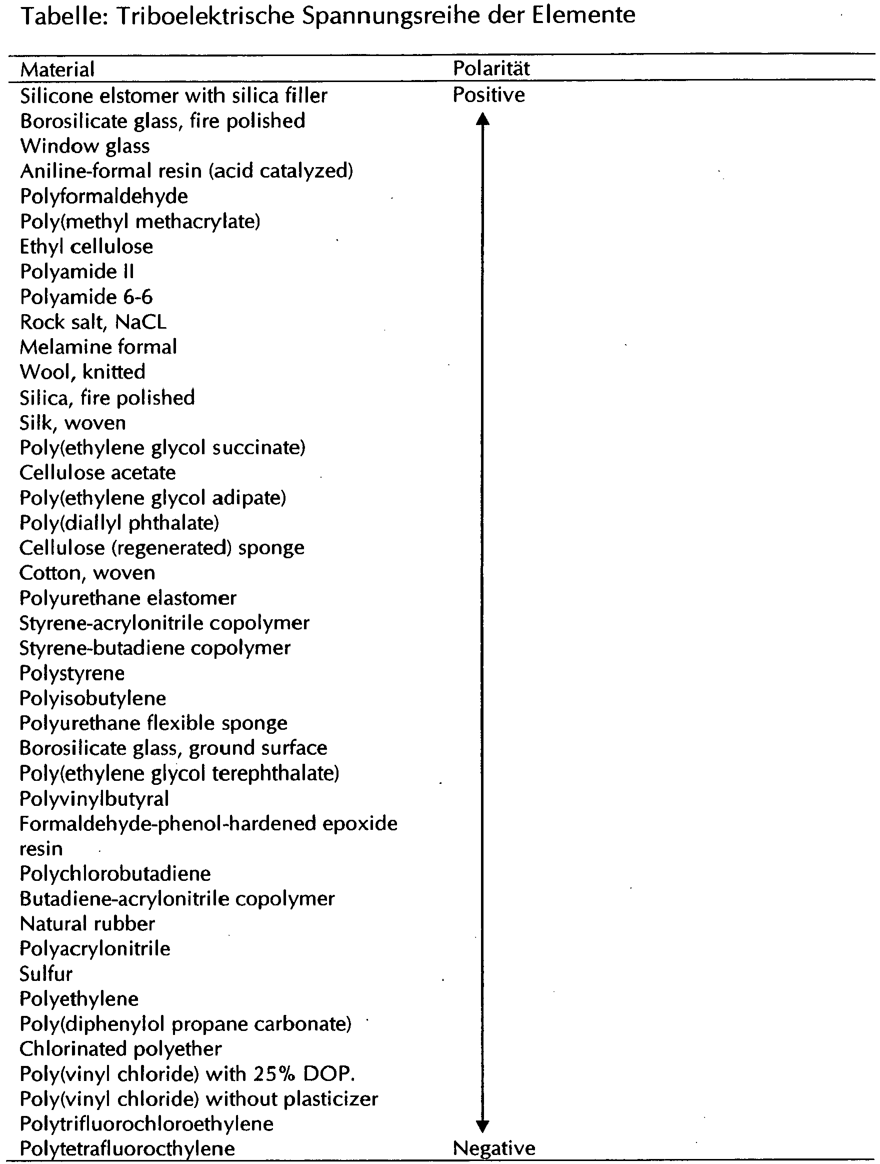

Zusammenfassend bleibt daher festzustellen, dass je größer die Potentialdifferenz zwischen zwei Stoffen ist, also je weiter sie in der vorstehend genannten Tabelle auseinanderliegen, desto größer die Ladungsgenerierung zwischen ihnen ist. Diese Spannungsreihe gilt dem Grunde nach auch für das zu behandelnde Fluid (Öl) und dem Material des Filtermediums 10 selbst. Für das Filterelement 10 bzw. seine Einzelfilterlagen heißt das, dass die einzusetzenden Filtermaterialien so zu wählen sind, dass die Potentialdifferenz zwischen ihnen und dem Öl so gering wie möglich ausfällt, also dass Öl und dass Filtermaterial in der Tabelle möglichst dicht beieinander liegen. Auf diese Art und Weise wird grundsätzlich wesentlich weniger Ladung generiert, die insoweit dann auch nicht an einen Massepunkt abgeführt zu werden braucht. Als besonders vorteilhaft hat sich erwiesen, um ein elektrostatisch optimiertes Filter zu erhalten, dass man für die jeweilige Filterlage 28,30 Glasfasermaterialien einsetzt, die das Öl nicht so hoch aufladen können.

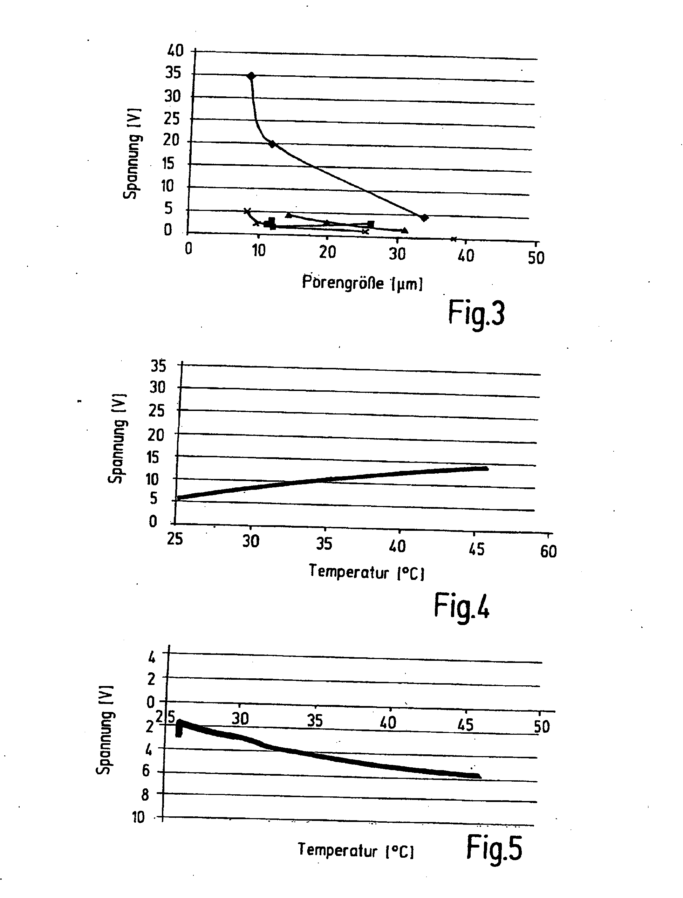

Die dahingehenden Verhältnisse sind beispielhaft in der Fig.3 wiedergegeben, wobei die dahingehende Abbildung die Spannung im Öl nach Durchströmen unterschiedlicher Glasfasermaterialien in Abhängigkeit von der mittleren Porengröße aufzeigt. Je nach eingesetztem Glasfaser-Filtermaterial geht die Spannung dann gegen Null.

In einem weiteren Schritt ist es nun möglich, Filterlagen miteinander zu kombinieren, die ohnehin ein geringeres Potential zum Öl haben, so dass sich entstehende Ladungen zusätzlich neutralisieren können. So kann beispielsweise die erste Lage (Vorfilterlage 28), die zuerst vom Öl durchströmt wird, ein positives Potential zum Öl haben und steht insoweit in der genannten Tabelle über dem Öl, wohingegen die zweite Schicht als Hauptfilterlage 30, die anschließend vom Öl durchströmt wird, ein negatives Potential hat und mithin in der Tabelle unter dem Öl steht. Die erste Lage 28 lädt dann das Öl positiv auf und die zweite Lage 30 wiederum negativ. Die hierdurch generierten Ladungen sollten sich auf diese Weise teilweise oder komplett neutralisieren können und schädigende Effekte sind vollständig vermieden. In der Fig.4 ist die dahingehende Spannung über der Temperatur im Öl nach Durchströmen einer Glasfilterlage als Vorfilterlage 28 zu sehen und die Spannung ist insoweit positiv. In der nachfolgenden Fig. 5 ist die Spannung über der Temperatur im Öl nach Durchströmen einer Kunststofffilterlage (Polyester) als Hauptfilterlage 30 zu sehen; hierbei ist die Spannung negativ. Die dahingehenden Kompensationseffekte treten natürlich auch dann ein, wenn die Lagen vom Material her gegeneinander getauscht sind oder wenn das Öl eine gegenläufige Durchströmungsrichtung einnimmt. Wie die Fig. 4 und 5 verdeutlichen, lädt sich also das Öl in beiden unterschiedlichen Materialien entgegengesetzt auf. Kombiniert man nun diese beiden Lagen miteinander wie dargestellt, indem man sie hintereinander legt oder sie nacheinander vom Öl durchströmen läßt (Stapelfilteranordnung), werden sich die entstehenden Ladungen zum Teil oder komplett neutralisieren. Auch besteht die Möglichkeit, die Fasern der jeweiligen Einzellage in der Art einer Matrix, z.B. als Mischung von Fasern unterschiedlicher Art, zusammenzufügen, um zu den gewünschten triboelektrischen Effekten zu gelangen.

Weitere Materialien, die man aufgrund unterschiedlicher Potentiale zum Öl miteinander kombinieren kann (entweder als unterschiedliche Lagen oder in Form der genannten Matrix), sind beispielsweise Glasfasern, synthetisches Material (z.B. Meltblown, Spunlace, Spunbonds, Nonwovens; Materialart: Polyester, Polypropylen, Polyamid, Polykarbonat), Metallgewebe, gesindertes Metall, Metallviiese, Kohlenstofffasern, Zellulose etc.. Vorteilhafte Kombinationsvarianten wären z.B. :
Glas - Synthetik
Glas - Zellulose
Glas - Metall
Synthetik - Zellulose
Synthetik - Metall
Zellulose - Metall
Glas - Synthetik - Zellulose
Glas - Synthetik - Metall
Glas - Zellulose - Metall
Synthetik - Zellulose - Metall

Die Reihenfolge der unterschiedlichen Materialien in Durchströmungsrichtung spielt, wie bereits dargelegt, dabei keine Rolle.

Eine weitere Lösungsvariante geht von der definierten Ableitfähigkeit des Gesamtsystems aus. Der Gedanke ist also eine definierte Ableitung von Ladung aus dem Filtermedium 10 zum eigentlichen Filtergehäuse (nicht dargestellt). Definierte Ableitung soll dabei bedeuten, dass eine mittlere Leitfähigkeit der Materialien im Filter gewählt wird, die dafür sorgt, dass die Ladung mit einer mittleren Geschwindigkeit aus dem Filter "entweichen" kann.

Dem Grunde nach sind bisher zwei Arten von Filter oder Filterelementen auf dem Markt. Es handelt sich dabei um leitfähige und nicht leitfähige Filter. Bei den leitfähigen Filtern wird die zwischen Filtermedium und Öl generierte Ladung im Filter über metallische Filterelementbauteile, wie Drahtgewebe, Stützrohr oder Endkappen, die in einem elektrischen Kontakt zueinander stehen, zum Gehäuse hin abgeleitet. Eine dahingehende Lösung ist beispielhaft in der DE 10 2004 005 202 A1 aufgezeigt. Der Nachteil der dahingehenden Lösung ist, dass für das Öl die höchste Aufladung entsteht, da die dem Öl entzogene Ladung über das Filtermedium ständig zum Gehäuse abgeführt werden kann, so dass sich kein Gleichgewicht oder eine Sättigung im Filter einstellen kann. Das Öl liefert ständig neue Ladung an das Filtermedium und das Öl verlässt somit hoch aufgeladen das Filter, was zu einer raschen Ölalterung führen kann. Andererseits kann sich aber auch keine Ladung im Filter aufbauen, da sie über die leitfähigen Komponenten des Filters weggeleitet wird mit der Folge, dass Entladungen im Filter, die die Filtermaterialien zerstören könnten, weitgehend ausgeschlossen sind.

Bei der anderen bekannten Lösungsform ist das Filter nicht leitfähig aufgebaut, d.h. die zwischen dem jeweiligen Filtermaterial und Öl generierte Ladung wird im Filter nicht zum Filtergehäuse hin abgeleitet. Es kommt bei entsprechend hohen Ladungsmengen dann zu einem Potentialaufbau im Filter und letztendlich zu Entladungen zwischen Filter und einem Massepunkt, wie beispielsweise dem zugeordneten Filtergehäuse. Ferner kann es zu Entladungen innerhalb des Filters zwischen Stellen mit unterschiedlichem Potential kommen, was das Filtermedium beschädigt und eine effektive Filtration wäre nicht mehr gewährleistet. Es besteht insbesondere die Gefahr, dass sich das Filter auflädt und eine kritische Feldstärke erreicht, was regelmäßig der Fall ist, wenn der Sättigungspunkt oberhalb der kritischen Feldstärke sich befindet. Es kommt dann zu Funkenüberschlägen im Filter oder vom Filter zu einem Massepunkt, wie beispielsweise dem Filtergehäuse.

Vorteilhaft hingegen ist, dass im Sinne der erfindungsgemäßen Lösung die Ladung im Filter bleibt und nicht weggeleitet werden kann, so dass es zu einem Gleichgewichtszustand kommt, bei dem das Filter bis auf einen bestimmten Wert aufgeladen wird. Liegt dieser Wert unter der genannten kritischen Feldstärke, bei der es zu Entladungen kommt, wird das Öl nicht weiter aufgeladen. Die Ladung im Öl, die den nicht leitfähigen Filter verlässt, ist also geringer als die Ladung im Öl, die ein leitfähiges Filterelement verlässt. Bei der erfindungsgemäßen Lösungsvariante wird demgemäß ein Kompromiss zwischen einem leitfähigen und einem nicht leitfähigen Filterelement gesucht und es ist vorgesehen, die Ladung langsamer wegzuführen als ein leitfähiges Filter, um somit das Öl nicht so hoch aufzuladen. Gleichzeitig ist die Gefahr einer Entladung wie im nicht leitfähigen Filterelement minimiert, da sich durch die langsame Ableitung keine hohe Feldstärke im Filterelement aufbauen kann. Filtermaterialien, die dieser Forderung entsprechen, nennt man ableitfähig.

Es gelten dabei folgende Zusammenhänge für den elektrischen Widerstand: Nicht leitfähiger Bereich >10⁹Ωm kein Elektronentransport möglich Ableitfähiger Bereich 10³ - 10⁹ Ωm langsamer Elektronentransport Leitfähiger Bereich <10³ Ωm schneller Elektronentransport

Eine praktische Realisierung dieser Idee liegt in einem Elementaufbau gemäß den Fig.1 und 2 begründet. Um die gewünschte Ableitfähigkeit zu gewährleisten, muss mindestens ein Teil des gezeigten Filters ableitfähig ausgestattet sein, wie z.B. die regelmäßig mit einem O-Ring (nicht dargestellt) versehene Endkappe 14,16, ein sonstiger ableitender Dichtring (nicht dargestellt), das Stützrohr 20 selbst oder ein Teil desselben sowie die Meshpack-Anordnung in Form des plissierten Filtermediums 10 oder eine oder mehrere Lagen 28,30 des Meshpacks. Es wird mithin ein definierter Weg vorgegeben, den die elektrische Ladung durch ableitfähige Teile wandern kann. Dieser Weg sollte vom Filtermedium 10 bis hin zu dem Gehäuse, in dem das Filter eingesetzt ist, reichen. Dieser Weg aus ableitfähigem Material kann auch von leitfähigen Komponenten durchsetzt sein, da das Geschwindigkeit bestimmende Material das am wenigsten leitfähige ist. Der Weg sollte also grundsätzlich nicht von nicht leitfähigen Materialien unterbrochen werden. Bevorzugte Transportwege wären beispielsweise vom Filtermedium 10 ausgehend über das Stützrohr 20 und einer Endkappe 12,14,16 hin zum nicht näher dargestellten Filtergehäuse gebildet.

Eine weitere Lösungsvariante setzt eine sog. Ladungsausgleichslage hinter der ölaufladenden Filterschicht 28 und/oder 30 ein. Die in den Fig.1 und 2 nicht näher dargestellte Ladungsausgleichslage gibt die Ladung aus dem Öl zurück an die jeweils vorgeschaltete Filterlage 28,30. Die Ladungsausgleichslage reduziert so die Aufladung des Öls und des Filters und verhindert Entladungen im Elementaufbau.

Wie bereits dargelegt, lädt sich Öl, das durch eine Filterlage fließt, elektrisch auf. Das Öl ist dann entweder positiv oder negativ geladen und die jeweilige Filterlage oder das ganze Filter ist entgegengesetzt dem Öl geladen. Legt man nun eine leitfähige oder ableitfähige Ausgleichslage hinter die jeweils durchströmte Filterlage, so dass diese elektrischen Kontakt zur Filterlage hat, wird die Ölladung beim Verlassen der jeweiligen Filterlage 28,30 ganz oder teilweise auf die Ausgleichslage übertragen. Die Ausgleichslage kann die Lage wiederum an die entgegengesetzt geladene Filterlage 30 bzw. 28 zurückgeben. Auf diese Weise verringert oder erlischt die Ölaufladung und die Elementaufladung. Elektrostatische Entladungen lassen sich dergestalt mit Sicherheit vermeiden.

Bei einer bevorzugten Ausführungsform sind bei der dahingehenden Lösungsvariante sowohl der Vorfilter 28 als auch die Hauptfilterlage 30 aus Glasfasermaterialien aufgebaut. Die leitfähige oder ableitfähige Ausgleichslage kann dann entweder hinter dem Hauptfilter 30 liegen oder hinter jeder anderen Lage (da jede Lage das Öl elektrisch aufladen kann). Das Material kann ein leitfähiges oder ableitfähiges Vlies, Gewebe, Netz oder anderes Gewirk sein, das beispielsweise aus Kunststoff, wie Polyester, aus Glas oder aus Zellulose als Hauptbestandteil bestehen könnte, das dann leitfähig oder ableitfähig beschichtet ist oder an sich eine intrinsische Leitfähigkeit oder Ableitfähigkeit besitzt. Es wäre auch denkbar, diese Ausgleichslage auf eine andere Lage aufzudampfen oder anders aufzutragen (Rakeln). Eine aufgedampfte Schicht könnte beispielsweise aus Aluminiumwerkstoff bestehen. Die Ausgleichslage muss keinen elektrischen Kontakt zur Endkappe 14,16 oder zum Stützrohr 20 haben; allerdings funktioniert sie auch mit einem dahingehenden elektrischen Kontakt.

Insbesondere die Lösungsvariante, die eine leitfähige oder bevorzugt ableitfähige Ausgleichslage einsetzt, kann noch verbessert werden, indem man eine Matrix aus leitfähigem Filtermaterial aufbaut. Grundgedanke ist, das eingesetzte Filtermaterial mit leitfähigen Fasern oder andersförmigen leitfähigen Bestandteilen zu versetzen, so dass das Filtermaterial leitfähig ist und die Ladung schnell an das Filtergehäuse und somit gegen Masse (Erde) abgeben kann. Die in Rede stehende Lösung kann aber auch eingesetzt werden, sofern das Filter isoliert ist. Das Filtermaterial mit leitfähiger Matrix kann eine Mischung sein aus herkömmlichem Filtermaterial, wie beispielsweise Kunststoff (Polyester), Glasfaser, Zellulose und leitfähigen Zusätzen, wie beispielsweise Kohlenstoff oder Edelstahl. Besonders bevorzugt ist die Vorfilterlage 28 aus Glasfasermaterialien aufzubauen und die Hauptfilterlage 30 aus Kohlenstoff in Verbindung mit einer Glasfasermatrix.

Alle genannten Lösungsvarianten führen zu elektrostatisch optimierten Filterelementen, die eine rasche Ölalterung vermeiden und die zur Entlastung von Hydraulik-Kreissystemen dem nachteiligen Effekt elektrostatischer Aufladung begegnen.

## Patentansprüche

1. Filter mit einem Filtermedium (10), das im Betrieb zum Abreinigen von Fluid dient, insbesondere in Form von Hydraulikflüssigkeit, wie Öl, wobei Teile des Filtermediums (10) zueinander und/oder zu dem zu reinigenden Fluid derart unterschiedliche Potentiale aufweisen, dass diese sich gegenseitig zumindest teilweise aufheben, wobei das Filterelement mehrlagig aufgebaut ist, wobei die einzusetzenden Filtermaterialien für die einzelnen Filterlagen derart aus einer triboelektrischen Spannungsreihe zu wählen sind, dass die Potentialdifferenz zwischen ihnen und dem die Filterlagen durchströmenden Fluid so gering wie möglich ausfällt, und wobei mindestens ein Teil des Filters ableitfähig ausgestaltet ist in Form einer mit einem O-Ring versehenen Endkappe (14, 16), in Form eines sonstig ableitenden Dichtringes, in Form eines Stützrohres (20) oder in Form eines Teils dieses Stützrohres (20).

2. Filter nach Anspruch 1, **dadurch gekennzeichnet, dass** die jeweils ableitfähigen Materialien des Filters einen elektrischen Widerstand zwischen 10³ bis 10⁹ Ωm besitzen.

3. Filter nach Anspruch 1 oder 2, **dadurch gekennzeichnet, dass** der vorgebbare Weg aus einzelnen Wegstrecken mit unterschiedlicher Ableitfähigkeit und/oder unterschiedlicher Leitfähigkeit derart gebildet ist, dass sich eine Geschwindigkeitseinstellung für den Abtransport elektrischer Ladungen ergibt.

4. Filter nach einem der Ansprüche 1 bis 3, **dadurch gekennzeichnet, dass** in Durchströmungsrichtung des Fluids durch das Filtermedium (10) diesem nachgeschaltet eine Ladungsausgleichslage vorhanden ist, die die entstehende elektrische Ladung des Fluids zumindest teilweise an das zugeordnete Filtermedium (10) zurückgibt.

5. Filter nach einem der Ansprüche 1 bis 4, **dadurch gekennzeichnet, dass** das Filtermedium (10) mit leitfähigen Fasern versetzt ist, die vorzugsweise eine leitfähige Matrix ausbilden.

6. Filter nach einem der Ansprüche 1 bis 5, **dadurch gekennzeichnet, dass** das Filtermedium (10) aus mindestens einer Einzellage besteht oder vorzugsweise aus zwei Einzellagen, die in der Art eines Vorfilters (28) und eines Hauptfilters (30) wirken.

7. Filter nach Anspruch 6, **dadurch gekennzeichnet, dass** das Filtermedium (10) neben der jeweils filtrierenden Einzellage noch Schutz- und/oder Stabilisierungslagen (24,26) aufweist.

8. Filter nach Anspruch 7, **dadurch gekennzeichnet, dass** das Filtermedium (10) als plissierte Filtermatte um das fluiddurchlässige Stützrohr (20) geführt ist und dass das Filter mit den Endkappen (12,14) versehen ist.
